# EUROPÄISCHE PATENTSCHRIFT

(11) **EP 4 197 908 B1**
(45) Veröffentlichungstag und Bekanntmachung des Hinweises auf die Patenterteilung: **01.10.2025**
(21) Anmeldenummer: 21214793.8
(22) Anmeldetag: 15.12.2021
(51) Int. Cl.: B64D 1/22

(54) **AUFNAHMEVORRICHTUNG ZUM AUFNEHMEN ODER ABLEGEN EINES GEGENSTANDES FÜR DIE ANBRINGUNG AN EINEM SCHWEBEFÄHIGEN LUFTFAHRZEUG**
HOLDER DEVICE FOR RECEIVING OR DEPOSITING AN OBJECT, FOR ATTACHMENT TO AN AIRCRAFT CAPABLE OF HOVERING
DISPOSITIF DE RÉCEPTION PERMETTANT DE RECEVOIR OU DE DÉPOSER UN OBJET, À APPLIQUER À UN AÉRONEF CAPABLE DE VOL STATIONNAIRE

(43) Veröffentlichungstag der Anmeldung: 21.06.2023
(73) Patentinhaber: Bischofberger, Josef, 64293 Darmstadt (DE)
(72) Erfinder: Bischofberger, Josef, 64297 Darmstadt (DE); Brunner, Dirk, 81241 München (DE)

(56) Entgegenhaltungen:
- EP-A1- 0 825 106
- EP-A1- 3 228 577
- WO-A1-2020/250484
- US-B1- 8 591 161
- US-B1- 9 688 404

## Beschreibung

Die Erfindung betrifft eine Aufnahmevorrichtung zum Aufnehmen oder Ablegen eines Gegenstandes für die Anbringung an einem schwebefähigen Luftfahrzeug.

Es ist bekannt, gefällte, liegende Baumstämme mit Hilfe von Seilkran-Erntesystemen oder Hubschraubern vom Ort der Baumfällung abzutransportieren.

Herkömmliche Seilkran-Ernte-Systeme, die bislang in nicht befahrbaren Waldflächen - insbesondere Gebirgswaldungen - eingesetzt werden, weisen verschiedene Nachteile auf, nämlich erforderliche Abholzung für Seiltrassen, ein zeit- und kostenintensives Auf- und Abbauen der Seilkran-Anlagen, Seilkran-technische-Verankerungs-Schäden am verbleibenden Baumbestand und ein erforderlicher Beizug zu Seiltrassen mit damit verbundenen Rückeschäden am verbleibenden Baumbestand.

Diese Nachteile lassen sich alleine schon durch den Einsatz von Lasten-TransportFluggeräten wie Helikoptern vermeiden, wobei zunächst ein am Hubschrauber befestigtes Lastenseil um einen zu rückenden Stamm geschlungen und der Baumstamm dann angehoben und an einen anderen Ort geflogen wird. Alternativ kann eine an dem Lastenseil befestigte öffen- und schließbare Greifvorrichtung vorgesehen werden, die durch entsprechende Flugbewegungen des Hubschraubers oberhalb des anzuhebenden Baumstammes gebracht wird und dann nach Umgreifen des Baumstammes automatisiert geschlossen wird.

Auf ähnliche Weise ist es auch möglich, andere Gegenstände wie Röhren oder nicht längliche Objekte wie Fahrzeuge, Paletten mit Material anzuheben oder an einer nur von oben zugänglichen Stelle abzulegen.

Lasten-Transport-Fluggeräte wie Helikopter haben aber andere Nachteile, nämlich ein zeit- und unfall risiko-behaftetes Erfassen der zu transportierenden Lasten und hohe, nur in Ausnahmefällen vertretbare Kosten.

Herkömmliche Aufnahmevorrichtungen haben ferner den Nachteil, dass ein schnelles Greifen der liegenden Objekte (Baumstämme) schwer möglich ist. Wenn diese mittels Schlingen am Hubschrauber bzw. einem daran angehängten Haken angebracht werden soll, so muss manuell eine solche Schlinge um das Objekt gelegt und dann eingehängt werden, was Zeit beanspruchen oder Personen gefährden kann. Sofern eine Greifvorrichtung automatisch den Baumstamm greifen soll, ist viel Erfahrung und Übung des Hubschrauberpiloten erforderlich, um das Manöver korrekt auszuführen und Gefährdungen von Personen im Hubschrauber oder am Boden oder Beschädigungen zu vermeiden.

Die EP 0 825 106 A1 beschreibt eine Vorrichtung zum Einholen gefällter Bäume mit einem Hubschrauber aus schwer zugänglichen Bereichen, wobei ein Seil und einem am unteren Teil des Seils angebrachten Greifer an einem Hubschrauberrumpf befestigt sind.

In der US 9,688,404 B1 sowie der WO 2020250484 A1 wird ein unbemanntes Luftfahrzeug beschrieben, welches zum Transport von Paketen und ähnlichen Gegenständen bestimmt ist.

Die US 8,591,161 B1 offenbart ein manövrierfähiges autonomes Drehflügler-Ladungsbefestigungssystem zum Einsatz im Cargo-Bereich.

In der EP 3 228 577 A1 werden Systeme und Verfahren zum Betreiben eines Hebezeugs und einer Hakenbaugruppe offenbart, welche beispielsweise unter einem Helikopter angebracht werden können.

Hiervon ausgehend liegt der Erfindung die Aufgabe zugrunde, eine automatisierte Aufnahme von schweren Gegenständen, insbesondere solche etwa zylindrischer Form, speziell Baumstämme mittels eines schwebefähigen Fluggerätes zu ermöglichen, die auf die manuelle Mitwirkung von Personal am Boden verzichten kann.

Diese Aufgabe wird erfindungsgemäß gelöst durch eine Grundstruktur mit einem unteren und einem oberen Ende, wobei am oberen Ende eine obere Fixiereinrichtung für ein am Luftfahrzeug anbringbares Zugmittel und an deren unterem Ende eine untere Fixiereinrichtung zur Befestigung des anzuhebenden Gegenstandes ausgebildet ist, ferner umfassend mindestens zwei horizontal wirkende, motorisch separat angetriebene Luftschrauben, deren Drehachsen nicht koaxial zu einander ausgerichtet sind.

Die Erfindung ermöglicht durch die gezielte Ansteuerung der Luftschrauben eine im wesentlichen horizontale Bewegbarkeit der Grundstruktur in zwei translatorischen und einer rotatorischen Achse bereitzustellen, welche es ermöglicht, die Grundstruktur derart oberhalb des aufzunehmenden Gegenstandes zu platzieren, dass die an der Grundstruktur befestigte untere Fixiereinrichtung den Gegenstand umgreifen und festhalten kann. Damit ist es möglich, das Luftfahrzeug nur an einer Stelle oberhalb des aufzunehmenden Gegenstandes zu halten und die genaue Ausrichtung von Grundstruktur bzw. unterer Fixiereinrichtung weitgehend unabhängig davon durchzuführen. Die Steuerung der Luftschrauben kann vorzugsweise kabellos mittels drahtloser Kommunikation aus dem Luftfahrzeug oder vom Boden aus erfolgen. Alternativ oder zusätzlich kann die Steuerung der Luftschrauben mittels Kameras und anderer Sensoren und Bildverarbeitung automatisiert erfolgen. Damit ist es möglich, das Greifen bzw. den Abtransport der Objekte zu beschleunigen und sicherer zu gestalten und/oder Piloten für das Luftfahrzeug einzusetzen, die keine besondere Erfahrung oder Befähigung für die Tätigkeit benötigen, weil das Luftfahrzeug lediglich etwa oberhalb des aufzunehmenden Objektes gehalten werden muss.

Es ist ebenfalls im Rahmen der Erfindung möglich, anstelle von pilotengesteuerten schwebefähigen Luftfahrzeugen unbemannte Luftfahrzeuge (UAV) zu verwenden, wodurch die Kosten für einen solchen Abtransport erheblich gesenkt werden können.

Insgesamt ermöglicht der Einsatz der Erfindung ein schnelleres und damit wirtschaftlicheres Aufnehmen bzw. Transportieren von Baumstämmen oder anderen Gegenständen.

Gemäß einer vorteilhaften Weiterbildung der Erfindung sind die beiden Luftschrauben im Winkel zueinander, vorzugsweise normal zueinander, angeordnet. Damit lässt sich besonders einfach eine translatorische Bewegung in einer horizontalen Ebene erreichen. Vorzugsweise schneidet eine der beiden Drehachsen dabei nicht die senkrechte Mittelachse der Grundstruktur, um auch eine Drehung der Grundstruktur zu ermöglichen. Um die Drehung der Grundstruktur zu ermöglichen, ist vorzugsweise in der oberen Fixiereinrichtung ein Drehgelenk ausgebildet, welche eine Drehung der Grundstruktur gegenüber dem Luftfahrzeug ermöglicht. Alternativ kann im Rahmen der Erfindung auch eine elastische Verformung des Tragseils erfolgen.

Ein Lasthaken als Aufnahmevorrichtung für den Transport von beispielsweise Baumstämmen mittels Seilschlingen ist ebenfalls denkbar. Der Lasthaken kann beispielsweise mechanisch, elektronisch oder hydraulisch betätigt werden und befindet sich vorzugsweise über der Wippgelenkeinrichtung und ist entgegen der Flugrichtung angeordnet.

Vorteilhaft ist weiterhin eine Aufnahmevorrichtung mit einem Schnellwechselsystem, damit unterschiedliche Aufnahmesysteme, beispielsweise Greifer, Magnetsammler, Saugheber, schnell und einfach gewechselt werden können.

Gemäß einer alternativen vorteilhaften Weiterbildung der Erfindung sind die beiden Luftschrauben parallel nebeneinander angeordnet. Auf diese Weise lässt sich eine Bewegung in einer horizontalen Richtung erreichen sowie eine Drehung der gesamten Vorrichtung.

Gemäß einer weiteren alternativen Weiterbildung der Erfindung sind drei Luftschrauben vorgesehen, von denen zwei parallel nebeneinander angeordnet sind und die dritte quer zu deren Drehachsen angeordnet ist. Auf diese Weise ist eine noch genauere Steuerung der Grundstruktur und damit Aufnahme eines Gegenstandes möglich.

Gemäß einer weiteren alternativen Weiterbildung der Erfindung sind vier Luftschrauben vorgesehen, von denen je zwei parallel nebeneinander angeordnet sind und die Luftschraubenpaare normal zu einander ausgerichtet sind. Diese Ausbildung ermöglicht eine sehr präzise Bewegung in der horizontalen Ebene und Drehung um die vertikale Achse. Bei gegenläufigen Propellern von zwei parallel ausgerichteten Luftschrauben lässt sich zudem das Drehmoment der Luftschrauben untereinander ausgleichen.

Gemäß einer vorteilhaften Weiterbildung der Erfindung ist die untere Fixiereinrichtung als Greifeinrichtung zum Umgreifen des Gegenstandes ausgebildet. Hierdurch ist eine gute Aufnahme des Gegenstandes gewährleistet, die ein versehentliches Verlieren desselben weitestgehend ausschließt.

Erfindungsgemäß ist zwischen der Grundstruktur und der Greifeinrichtung eine Wippgelenkeinrichtung angeordnet, die maschinell betätigbar ist, um ein Kippen der unteren Fixiereinrichtung zu ermöglichen. Dies ermöglicht es, die Zugriffsrichtung der Fixiereinrichtung zu verändern, wenn ein Greifen des aufzunehmenden Gegenstandes in der Grundposition nicht möglich oder schwierig ist.

Gemäß einer vorteilhaften Weiterbildung der Erfindung sind die Luftschrauben mittels an der Grundstruktur angebrachter Elektromotoren antreibbar. Damit ist eine sehr einfache und genaue Ansteuerung der Elektromotoren möglich, wobei die Energie entweder mittels einer Stromleitung vom Luftfahrzeug bereitgestellt wird oder in einem Akkumulator bereitgestellt ist, der an der Grundstruktur befestigt ist. Eine Kombination daraus ist im Rahmen der Erfindung möglich, wobei der Akkumulator während des Fluges langsam geladen wird und bei Betrieb der Erfindung die Spitzenlast zur Verfügung stellt.

Gemäß einer vorteilhaften Weiterbildung der Erfindung umfasst die obere Fixiereinrichtung eine Hubeinrichtung, mittels der die Aufnahmevorrichtung um eine vorgegebene Strecke relativ zum Zugmittel vertikal verschiebbar ist. Hierdurch ist es möglich, die Aufnahmevorrichtung oberhalb des aufzunehmenden Gegenstandes zu platzieren und beim Greifvorgang diese abzusenken, ohne dass das Luftfahrzeug eine solche vertikale Bewegung ausführen muss, also an gleicher Stelle schwebend gehalten werden kann. Gemäß einer vorteilhaften Weiterbildung der Erfindung umfasst die Aufnahmevorrichtung eine Kontrolleinheit mit mindestens einer Kamera, welche die Umgebung der Greifeinrichtung optisch erfasst, wobei die Kontrolleinheit eine Bilddatenverarbeitungseinheit umfasst, welche aufgrund der Bilddaten eine Relativposition der Aufnahmevorrichtung zum aufzunehmenden Gegenstand ermittelt. Damit kann einer Person, welche über eine Kontrolleinrichtung für die Luftschrauben verfügt, eine genaue Positionierung der Aufnahmevorrichtung ermöglicht werden.

Bei einer bevorzugten Ausbildung ist die Kontrolleinheit mit einer in einem angeschlossenen Luftfahrzeug platzierbaren Kontrolleinheit koppelbar, über welche dem Luftfahrzeug Bewegungsvorgaben signalisierbar sind. Dadurch kann der Pilot des Luftfahrzeuges eine Grobpositionierung der Aufnahmevorrichtung vornehmen, so dass die erfindungsgemäßen Luftschrauben nur noch eine Feinjustierung vornehmen müssen.

Gemäß einer vorteilhaften Weiterbildung dieser Ausbildung ist die Kontrolleinheit eingerichtet und ausgebildet, aufgrund der ermittelten Relativposition die Hubeinrichtung und/oder die Greifeinrichtung und/oder mindestens eine der Luftschrauben autonom anzusteuern, um die Aufnahmevorrichtung automatisiert in eine Position zu bringen, in welcher der Gegenstand aufnehmbar ist.

Die Erfindung umfasst die Verwendung der Aufnahmevorrichtung mit einzelnen oder allen der vorhergehenden Merkmale von länglichen, im Wesentlichen zylindrischen Gegenständen, insbesondere liegenden Baumstämmen.

Die Erfindung umfasst ferner eine Schwerlastdrohne zum Aufnehmen eines Gegenstandes, wobei diese mit einer Aufnahmevorrichtung gekoppelt ist, die einzelne oder alle der vorhergehenden Merkmale umfasst. Insbesondere betrifft die Erfindung eine Verwendung der Schwerlastdrohne zur Aufnahme von Baumstämmen.

Weitere Vorteile, Merkmale und Einzelheiten ergeben sich aus der nachfolgenden Beschreibung, in der - gegebenenfalls unter Bezug auf die Zeichnungen - zumindest ein Ausführungsbeispiel im Einzelnen beschrieben ist. Gleiche, ähnliche und/oder funktionsgleiche Teile sind mit gleichen Bezugszeichen versehen.

Es zeigen:
- Figur 1:: eine schematische Ansicht einer Transporteinrichtung für Baumstämme, umfassend eine Drohne mit daran angebrachter Aufnahmevorrichtung gemäß der Erfindung;
- Figur 2:: eine perspektivische Ansicht einer ersten Ausführungsform der erfindungsgemäßen Transporteinrichtung,
- Figur 3:: eine perspektivische Ansicht einer zweiten Ausführungsform der erfindungsgemäßen Transporteinrichtung,
- Figur 4:: eine perspektivische Ansicht einer dritten Ausführungsform der erfindungsgemäßen Transporteinrichtung,
- Figur 5:: eine perspektivische Ansicht einer vierten Ausführungsform der erfindungsgemäßen Transporteinrichtung,
- Figur 6:: eine perspektivische Ansicht einer fünften Ausführungsform der erfindungsgemäßen Transporteinrichtung.

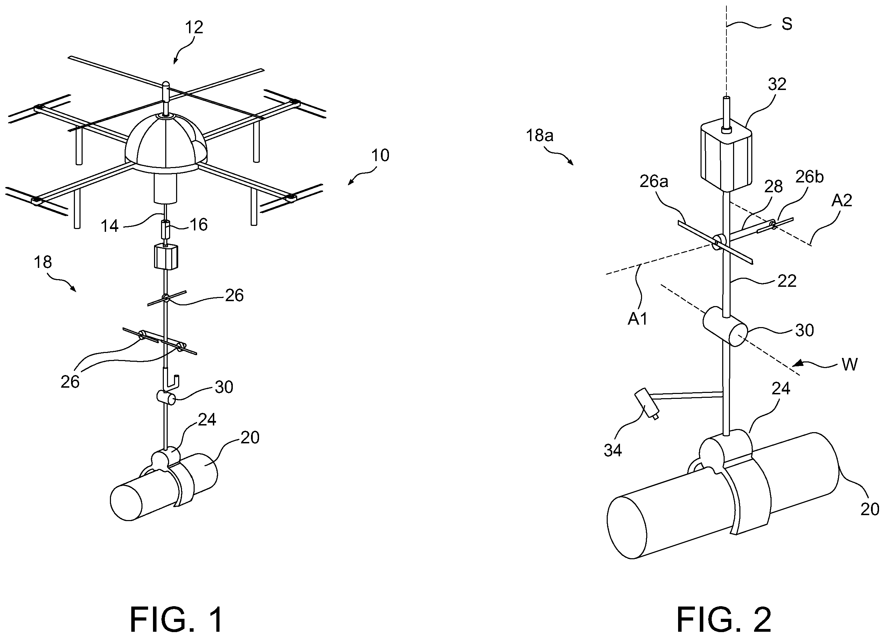

Figur 1 zeigt eine Transporteinrichtung 10 umfassend eine Drohne 12, ein Lastseil 14, eine obere Fixierung 16 und die erfindungsgemäße Aufnahmevorrichtung 18 mit einem erfassten Baumstamm 20, die in den folgenden Zeichnungen näher dargestellt und erläutert wird. Anstelle der Drohne 12 kann auch ein Hubschrauber mit der erfindungsgemäßen Aufnahmevorrichtung 18 gekoppelt sein. Das Lastseil 14 ist vorzugsweise ein Stahlseil, somit können auch Stromversorgungs- und/oder Signalleitungen zur Steuerung von Geräten oder Aktoren angebracht sein.

Die obere Fixierung 16 dient zur Fixierung bzw. Anbringung der erfindungsgemäßen Aufnahmevorrichtung 18 am Lastseil 14 bzw. zu deren Trennung und umfasst vorzugsweise ein Drehgelenk, um ein Drehen der Aufnahmevorrichtung 18 relativ zur Drohne 12 ohne Torsion des Lastseils 14 zu umfassen. Das Drehgelenk kann eine elektrische Verstelleinrichtung umfassen oder aber passiv arbeiten, so dass eine Drehung der Transportvorrichtung allein über die weiter unten gezeigten Luftschrauben erfolgt. Die obere Fixierung 16 umfasst vorzugsweise eine motorisch betriebene axiale Verstellvorrichtung, um die Aufnahmevorrichtung 18 relativ zum Lastseil 14 bzw. der Drohne 12 vertikal zu heben oder zu senken, um auch eine vertikale Positionierung der Aufnahmevorrichtung 18 ohne Höhenveränderung der Drohne 12 zu ermöglichen, wenn der aufzunehmende Gegenstand erfasst werden soll.

In Figur 2 ist eine erste Ausführungsform der Aufnahmevorrichtung 18a dargestellt, die aus einer Grundstruktur 22 besteht, an der eine untere Fixiereinrichtung 24 sowie mehrere angetriebene Luftschrauben 26 angebracht sind. Die untere Fixiereinrichtung 24 ist vorzugsweise als Greifeinrichtung ausgebildet, die elektromotorisch oder hydraulisch zwischen einer gezeigten geschlossenen und einer offenen Stellung bewegbar ist.

Die erste Ausführung der Aufnahmevorrichtung 18a umfasst eine erste Luftschraube 26a mit einer horizontalen Drehachse A1, welche die vertikale Schwerlinienachse S der Aufnahmevorrichtung 18a schneidet und damit je nach Drehrichtung eine Bewegung der Aufnahmevorrichtung 18a in der positiven oder negativen Richtung der Drehachse A1 ermöglicht. Bei dieser Ausführung ist eine zweite Luftschraube 26b vorhanden, die über einen Abstandshalter 28 an der Grundstruktur 22 angebracht ist, wobei deren Drehachse A2 senkrecht zur Drehachse A1 verläuft, so dass die zweite Luftschraube 26b dazu dient, die gesamte Aufnahmevorrichtung 18a um die vertikale Drehachse S zu drehen.

Die Luftschrauben 26a, 26b werden durch dargestellte Elektromotoren angetrieben.

Die Aufnahmevorrichtung 18a umfasst ferner eine elektrisch oder hydraulisch angetriebene Wippgelenkeinrichtung 30, um den unteren Teil der Aufnahmevorrichtung 18a bzw. die untere Fixiereinrichtung 24 um eine horizontale Drehachse W zu verschwenken, um die Aufnahme eines Gegenstandes 20 mittels der Fixiereinrichtung 24 auch dann zu ermöglichen, wenn der Gegenstand nicht horizontal auf dem Boden sondern beispielsweise auf einem Hang liegt oder mit vorbereitetem Fällschnitt noch senkrecht steht.

Eine Zentraleinheit 32 umfasst eine Kontrolleinrichtung für alle angetriebenen Elemente, insbesondere die Luftschrauben 26a, 26b, die Fixiereinrichtung 24, die Wippgelenkeinrichtung 30, die obere Fixierung 16 sowie deren Bestandteile. Sofern eine Energieversorgung nicht über eine Leitung aus der Drohne 12 (bzw. dem Hubschrauber) erfolgt, ist dort ein Akkumulator oder ein Stromaggregat oder beides untergebracht. Sofern einzelne Aktoren hydraulisch angetrieben werden, wird dort eine Hydraulikzentrale mit Hydraulikpumpen und Ventilen vorgesehen sein. Sofern die Aufnahmevorrichtung 18a Kameras 34 umfasst, um die Umgebung der Fixiereinrichtung 24 optisch zu erfassen, werden deren Bildsignale auch in der Zentraleinheit 32 verarbeitet, also entweder auf Bildschirme projiziert oder mittels Bildverarbeitung analysiert, um geometrische Lagedaten beim Greifvorgang von Bauteilen 20 bereitzustellen.

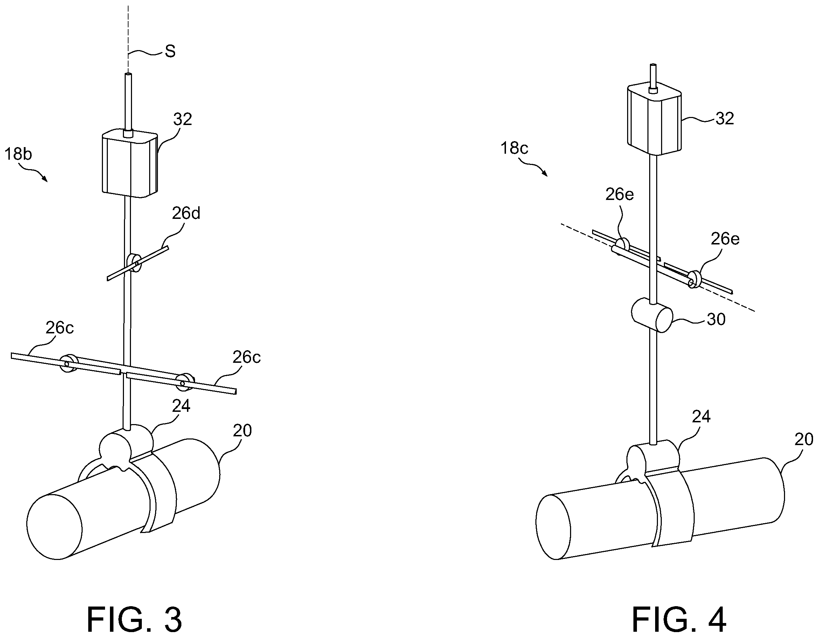

In Figur 3 ist eine zweite Ausführungsform der Aufnahmevorrichtung 18b dargestellt, die sich von der ersten Ausführungsform 18a nur durch die Anordnung der Luftschrauben 26c, 26d unterscheidet. Die beiden Luftschrauben 26c haben parallele Drehachsen, die senkrecht beabstandet zur vertikalen Drehachse S verlaufen und gemeinsam je nach Drehrichtung eine horizontale Verschiebung der Aufnahmevorrichtung 18b und/oder deren Drehung um die Achse S bewirken. Die dritte Luftschraube 26d hat eine Drehachse, die senkrecht zur vertikalen Achse S und zu den Drehachsen der anderen Luftschrauben 26c verläuft und damit eine Bewegung in deren Achsrichtung ermöglicht, so dass die Aufnahmevorrichtung 18b einen Bewegungsfreiheitsgrad mehr hat als die erste Ausbildung.

In Figur 4 ist eine dritte Ausführungsform der Aufnahmevorrichtung 18c dargestellt, die sich von der ersten Ausführungsform 18a dadurch unterscheidet, dass zwei parallel ausgerichtete Luftschrauben 26e vorgesehen sind, was die Anordnung baulich einfach macht, aber dafür der zusätzliche Freiheitsgrad verloren geht.

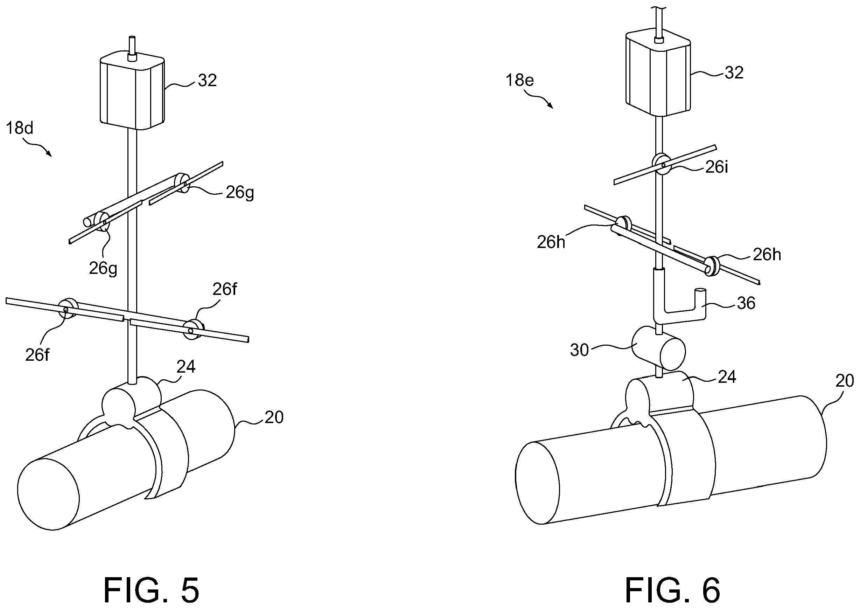

In Figur 5 ist eine vierte Ausführungsform der Aufnahmevorrichtung 18d dargestellt, die vier Luftschrauben 26f, 26g umfasst, wobei je zwei Luftschrauben 26f bzw. 26g paarweise parallel zueinander angeordnet sind. Hierdurch ist die größtmögliche Bewegbarkeit der Aufnahmevorrichtung 18d in horizontal translatorischer als auch rotatorischer Hinsicht erreichbar.

In Figur 6 ist eine fünfte Ausführungsform der Aufnahmevorrichtung 18e dargestellt, die zwei parallele Luftschrauben 26h, 26h sowie eine dritte dazu senkrechte Luftschraube 26i umfasst. Diese Ausführungsform hat oberhalb der Wippgelenkeinrichtung 30 einen automatisch öffenbaren Lasthaken 36, der bei weggeklappter Fixiereinrichtung 24 ein Einhaken einer nicht gezeigten Schlinge ermöglicht, durch welche zusätzlich oder alternativ ein Baumstamm angehängt werden kann. Ein solcher Lasthaken 36 kann im Rahmen der Erfindung natürlich auch bei anderen Luftschraubenkonstellationen zur Anwendung gelangen. Zweckmäßigerweise sollte allerdings eine Wippgelenkeinrichtung 30 vorhanden sein.

Obwohl die Erfindung im Detail durch bevorzugte Ausführungsbeispiele näher illustriert und erläutert wurde, so ist die Erfindung nicht durch die offenbarten Beispiele eingeschränkt und andere Variationen können vom Fachmann hieraus abgeleitet werden, ohne den Schutzumfang der Erfindung zu verlassen. Es ist daher klar, dass eine Vielzahl von Variationsmöglichkeiten existiert. Es ist ebenfalls klar, dass beispielhaft genannte Ausführungsformen wirklich nur Beispiele darstellen, die nicht in irgendeiner Weise als Begrenzung etwa des Schutzbereichs, der Anwendungsmöglichkeiten oder der Konfiguration der Erfindung aufzufassen sind. Vielmehr versetzen die vorhergehende Beschreibung und die Figurenbeschreibung den Fachmann in die Lage, die beispielhaften Ausführungsformen konkret umzusetzen, wobei der Fachmann in Kenntnis des offenbarten Erfindungsgedankens vielfältige Änderungen beispielsweise hinsichtlich der Funktion oder der Anordnung einzelner, in einer beispielhaften Ausführungsform genannter Elemente vornehmen kann, ohne den Schutzbereich zu verlassen, der durch die Ansprüche definiert wird.

### Bezugszeichenliste

- 10: Transporteinrichtung
- 12: Drohne / Hubschrauber
- 14: Lastseil
- 16: obere Fixierung
- 18 a-d: Aufnahmevorrichtung
- 20: Baumstamm / Gegenstand
- 22: Grundstruktur
- 24: untere Fixiereinrichtung
- 26 a-i: Luftschrauben
- 28: Abstandshalter
- 30: Wippgelenkeinrichtung
- 32: Zentraleinheit
- 34: Kameras
- 36: Lasthaken

- A1: Drehachse
- A2: Drehachse
- W: Drehachse
- S: Schwerlinienachse

## Patentansprüche

1. Aufnahmevorrichtung (10) zum Aufnehmen eines Gegenstandes (20), für die Anbringung an einem schwebefähigen Luftfahrzeug (12), umfassend eine Grundstruktur (22) mit einem unteren und einem oberen Ende, wobei am oberen Ende eine obere Fixiereinrichtung (16) für ein am Luftfahrzeug (12) anbringbares Zugmittel (14) und an deren unterem Ende eine untere Fixiereinrichtung (24) zur Befestigung des anzuhebenden Gegenstandes (20) ausgebildet ist, ferner umfassend mindestens zwei horizontal wirkende, motorisch separat angetriebene Luftschrauben (26), deren Drehachsen nicht koaxial zu einander ausgerichtet sind,
und wobei zwischen der Grundstruktur (22) und der unteren Fixiereinrichtung (24) eine Wippgelenkeinrichtung (30) angeordnet ist, um ein Kippen der unteren Fixiereinrichtung zu ermöglichen, **dadurch gekennzeichnet, dass** die Wippgelenkeinrichtung (30) eine elektrisch oder hydraulisch angetriebene Wippgelenkeinrichtung ist.

2. Aufnahmevorrichtung nach Anspruch 1, wobei die beiden Luftschrauben (26a, 26b) im Winkel zueinander, vorzugsweise normal zueinander, angeordnet sind.

3. Aufnahmevorrichtung nach Anspruch 1, wobei die beiden Luftschrauben (26e) parallel nebeneinander angeordnet sind.

4. Aufnahmevorrichtung nach Anspruch 1, wobei diese drei Luftschrauben (26c, 26d) aufweist, von denen zwei (26c) parallel nebeneinander angeordnet sind und die dritte Luftschraube (26d) quer zu deren Drehachsen angeordnet ist.

5. Aufnahmevorrichtung nach Anspruch 1, wobei diese vier Luftschrauben (26f, 26g) aufweist, von denen je zwei parallel nebeneinander angeordnet sind und die Luftschraubenpaare (26f, 26g) normal zueinander ausgerichtet sind.

6. Aufnahmevorrichtung nach einem der vorhergehenden Ansprüche, wobei die untere Fixiereinrichtung (24) als Greifeinrichtung zum Umgreifen des Gegenstandes ausgebildet ist.

7. Aufnahmevorrichtung nach Anspruch 1 oder 6, wobei diese zusätzlich einen Lasthaken (36) zur Aufnahme mindestens einer Seilschlinge umfasst.

8. Aufnahmevorrichtung nach einem der vorhergehenden Ansprüche, wobei die Luftschrauben (26) mittels an der Grundstruktur angebrachter Elektromotoren antreibbar sind.

9. Aufnahmevorrichtung nach Anspruch 1, wobei die obere Fixiereinrichtung (16) eine Hubeinrichtung umfasst, mittels der die Aufnahmevorrichtung (10) um eine vorgegebene Strecke relativ zum Zugmittel (14) vertikal höhenverstellbar ist.

10. Aufnahmevorrichtung nach Anspruch 1, wobei diese eine Kontrolleinheit (32) mit mindestens einer Kamera (34) umfasst, welche die Umgebung der unteren Fixiereinrichtung (24) optisch erfasst, wobei die Kontrolleinheit (32) eine Bilddatenverarbeitungseinheit umfasst, welche aufgrund der Bilddaten eine Relativposition der Aufnahmevorrichtung (10) zum aufzunehmenden Gegenstand (20) ermittelt.

11. Aufnahmevorrichtung nach Anspruch 10, wobei die Kontrolleinheit (32) mit einer im Luftfahrzeug (12) platzierbaren Steuereinheit koppelbar ist, über welche dem Luftfahrzeug (12) Bewegungsvorgaben signalisierbar sind.

12. Aufnahmevorrichtung nach Anspruch 10, wobei die Kontrolleinheit (32) eingerichtet und ausgebildet ist, aufgrund der ermittelten Relativposition die Hubeinrichtung und/oder die untere Fixiereinrichtung (24) und/oder mindestens eine der Luftschrauben (26) anzusteuern, um die Aufnahmevorrichtung (10) in eine Position zu bringen, in welcher der Gegenstand (20) aufnehmbar ist.

13. Verwendung der Aufnahmevorrichtung nach einem der vorhergehenden Ansprüche zur Aufnahme von länglichen, im Wesentlichen zylindrischen Gegenständen, insbesondere liegenden Baumstämmen (20).

14. Schwerlastdrohne zum Aufnehmen eines Gegenstandes, wobei diese mit einer Aufnahmevorrichtung (10) nach einem der Ansprüche 1-12 gekoppelt ist.

## Claims

1. A receiving device (10) for receiving an object (20) for attachment to a hovering aircraft (12), comprising a base structure (22) with a lower and an upper end, wherein an upper fixing device (16) for a traction means (14) attachable to the aircraft (12) is formed at the upper end, and a lower fixing device (24) for securing the object (20) to be lifted is formed at the lower end thereof, further comprising at least two horizontally acting, separately motor-driven propellers (26), the rotation axes of which are not coaxially aligned with one another, and wherein a rocker joint device (30) is arranged between the base structure (22) and the lower fixing device (24) to enable tilting of the lower fixing device, **characterized in that**
the rocker joint device (30) is an electrically or hydraulically driven rocker joint device.

2. The receiving device according to claim 1, wherein the two propellers (26a, 26b) are arranged at an angle to each other, preferably perpendicular to each other.

3. The receiving device according to claim 1, wherein the two propellers (26e) are arranged parallel to one another.

4. The receiving device according to claim 1, wherein the receiving device comprises three propellers (26c, 26d), two of which (26c) are arranged parallel to one another, and the third propeller (26d) is arranged transversely to their axes of rotation.

5. The receiving device according to claim 1, wherein the receiving device comprises four
propellers (26f, 26g), two of which are arranged parallel to one another, and the propeller pairs (26f, 26g) are aligned perpendicularly to one another.

6. The receiving device according to one of the preceding claims, wherein the lower fixing device (24) is designed as a gripping device for gripping the object.

7. The receiving device according to claim 1 or 6, further comprising a load hook (36) for receiving at least one cable loop.

8. The receiving device according to any one of the preceding claims, wherein the propellers (26) are driven by electric motors attached to the base structure.

9. The receiving device according to claim 1, wherein the upper fixing device (16) comprises a lifting device by means of which the receiving device (10) can be vertically adjusted by a predetermined distance relative to the traction means (14).

10. The receiving device according to claim 1, further comprising a control unit (32) with at least one camera (34) that optically records the surroundings of the lower fixing device (24), wherein the control unit (32) comprises an image data processing unit that determines a relative position of the receiving device (10) to the object (20) to be picked up based on the image data.

11. The receiving device according to claim 10, wherein the
control unit (32) is coupled to a control unit that can be placed in the aircraft (12), via which movement instructions can be signaled to the aircraft (12).

12. The receiving device according to claim 10, wherein the
control unit (32) is configured and designed to control the lifting device and/or the lower fixing device (24) and/or at least one of the propellers (26) based on the determined relative position in order to bring the receiving device (10) into a position in which the object (20) can be received.

13. Use of the receiving device according to one of the preceding claims for receiving elongated, substantially cylindrical objects, in particular lying tree trunks (20).

14. A heavy-duty drone for picking up an object, wherein the drone is coupled to a pickup device (10) according to any one of claims 1-12.

## Revendications

1. Dispositif de réception (10) pour recevoir un objet (20), pour la fixation sur un aéronef planable (12), comprenant une structure de base (22) avec une extrémité inférieure et une extrémité supérieure, dans laquelle à l'extrémité supérieure une partie supérieure
Dispositif de fixation (16) pour un moyen de traction (14) pouvant être fixé à l'aéronef (12) et à l'extrémité inférieure duquel est formé un dispositif de fixation inférieur (24) pour fixer l'objet (20) à soulever, comprenant en outre au moins deux hélices (26) à moteur séparé, à actionnement horizontal, dont les axes de rotation ne sont pas coaxiaux l'un par rapport à l'autre,
et dans lequel un dispositif d'articulation à bascule (30) est disposé entre la structure de base (22) et le dispositif de fixation inférieur (24) pour permettre l'inclinaison du dispositif de fixation inférieur, **caractérisé en ce que**
le dispositif à bascule (30) est un dispositif électrique ou hydraulique
dispositif de joint à bascule entraîné.

2. Dispositif de réception selon la revendication 1, dans lequel les deux Les hélices (26a, 26b) sont disposées à un angle l'une par rapport à l'autre, de préférence perpendiculairement l'une à l'autre.

3. Dispositif d'enregistrement selon la revendication 1, dans lequel les deux hélices (26e) sont disposées parallèlement l'une à l'autre.

4. Dispositif d'enregistrement selon la revendication 1, dans lequel lesdits trois hélices (26c, 26d), dont deux (26c) sont disposées parallèlement l'une à l'autre et la troisième hélice (26d) est disposée transversalement à leurs axes de rotation.

5. Dispositif d'enregistrement selon la revendication 1, dans lequel lesdits quatre hélices (26f, 26g), dont deux sont disposées parallèlement l'une à l'autre et les paires d'hélices (26f, 26g) sont alignées normalement l'une par rapport à l'autre.

6. Dispositif de réception selon l'une des revendications précédentes, dans lequel le dispositif de fixation inférieur (24) est conçu comme un dispositif de préhension pour saisir l'objet.

7. Dispositif de réception selon la revendication 1 ou 6, dans lequel ledit comprend en outre un crochet de charge (36) destiné à recevoir au moins une boucle de corde.

8. Dispositif de réception selon l'une des revendications précédentes, dans lequel les hélices (26) peuvent être entraînées par des moteurs électriques fixés à la structure de base.

9. Dispositif de réception selon la revendication 1, dans lequel la partie supérieure Le dispositif de fixation (16) comprend un dispositif de levage au moyen duquel le dispositif de réception (10) peut être réglé verticalement en hauteur d'une distance prédéterminée par rapport au moyen de traction (14).

10. Dispositif de réception selon la revendication 1, dans lequel ledit dispositif de réception comprend un
Unité de commande (32) avec au moins une caméra (34) qui enregistre optiquement l'environnement du dispositif de fixation inférieur (24), l'unité de commande (32) comprenant une unité de traitement de données d'image qui détermine une position relative du dispositif d'enregistrement (10) par rapport à l'objet (20) à enregistrer sur la base des données d'image.

11. Dispositif d'enregistrement selon la revendication 10, dans lequel
L'unité de commande (32) peut être couplée à une unité de commande qui peut être placée dans l'aéronef (12), par l'intermédiaire de laquelle des instructions de mouvement peuvent être signalées à l'aéronef (12).

12. Dispositif d'enregistrement selon la revendication 10, dans lequel
L'unité de commande (32) est configurée et conçue pour commander le dispositif de levage et/ou le dispositif de fixation inférieur (24) et/ou au moins une des hélices (26) sur la base de la position relative déterminée afin d'amener le dispositif de réception (10) dans une position dans laquelle l'objet (20) peut être reçu.

13. Utilisation du dispositif de réception selon l'une des revendications précédentes pour Ramasser des objets allongés, essentiellement cylindriques, notamment des troncs d'arbres couchés (20).

14. Drone robuste pour la récupération d'un objet, par lequel
celui-ci est couplé à un dispositif de réception (10) selon l'une des revendications 1 à 12.
